Europäisches Patentamt

European Patent Office

Office européen des brevets

(11) Publication number: 0 344 999 A2

# EUROPEAN PATENT APPLICATION

(21) Application number: 89305398.3

(51) Int. Cl.⁴: G06F 13/42

(22) Date of filing: 30.05.89

(30) Priority: 30.05.88 JP 132073/88

(43) Date of publication of application:
06.12.89 Bulletin 89/49

(84) Designated Contracting States:
DE FR GB

(71) Applicant: KABUSHIKI KAISHA TOSHIBA
72, Horikawa-cho Saiwai-ku
Kawasaki-shi Kanagawa-ken 210(JP)

(72) Inventor: Yoshida, Takuji
Patent Division, Toshiba Corp. 1-1-1
Shibaura
Minato-ku Tokyo(JP)

(74) Representative: Muir, Ian R. et al
HASELTINE LAKE & CO. Hazlitt House 28
Southampton Buildings Chancery Lane
London WC2A 1AT(GB)

(54) Data transmission system.

(57) A data transmission system for transferring data between a host computer (10) and an external memory (18) includes a data bus (14) connected to the host computer (10) for carrying data to and from the host computer (10) according to a prescribed protocol, a memory bus (20a) connected to the external memory (18) for carrying data to and from the external memory (18) according to the same prescribed protocol and a memory controller (16) connected between the data bus (14) and the memory bus (20a) for transferring the data therebetween.

EP 0 344 999 A2

## DATA TRANSMISSION SYSTEM

The present invention relates generally to a data transmission system, and more particularly, to a data transmission system for transferring data between a host computer and an external memory.

Recently, a data reproducing device capable of reproducing data from a compact disc (hereinafter, called a CD) system has become widely used.

The CD which is used for such a CD system has pits (uneven pits having different reflection factors) corresponding to digital data formed on one side of a disc medium made of transparent resin, with a very thin metal film such as aluminium, etc. coated thereon. Additionally, a solid protection layer is provided over the metal film.

In such a CD system, it is possible to reproduce sound with extremely high quality for more than one hour using an optical head from a small disc with 12 cm diameter without any physical contact of the head with the disc. Further, for this CD system, it is desirable to record data at the same density on the inner periphery and the outer periphery of substantially the whole surface of the disc in order to minimize the size of the disc. For this purpose, a method of the operation has been adopted in which the speed of rotation of the disc is changed in dependance upon the position of the optical head, containing a semiconductor laser or a photoelectric conversion element, relative to the inner/outer periphery of the disc so as to provide a substantially constant linear velocity for the data passing the optical head. This method of operation is called CLV (Constant Linear Velocity).

Recently, taking notice of the enormous recording capacity possible with the CD system, a CD-ROM (Read Only Memory) has been developed as a read only data recording medium. This CD-ROM is used for the recording/reproducing of digital data by adding an extra recording format to the basic two-channel recording format of the CD system.

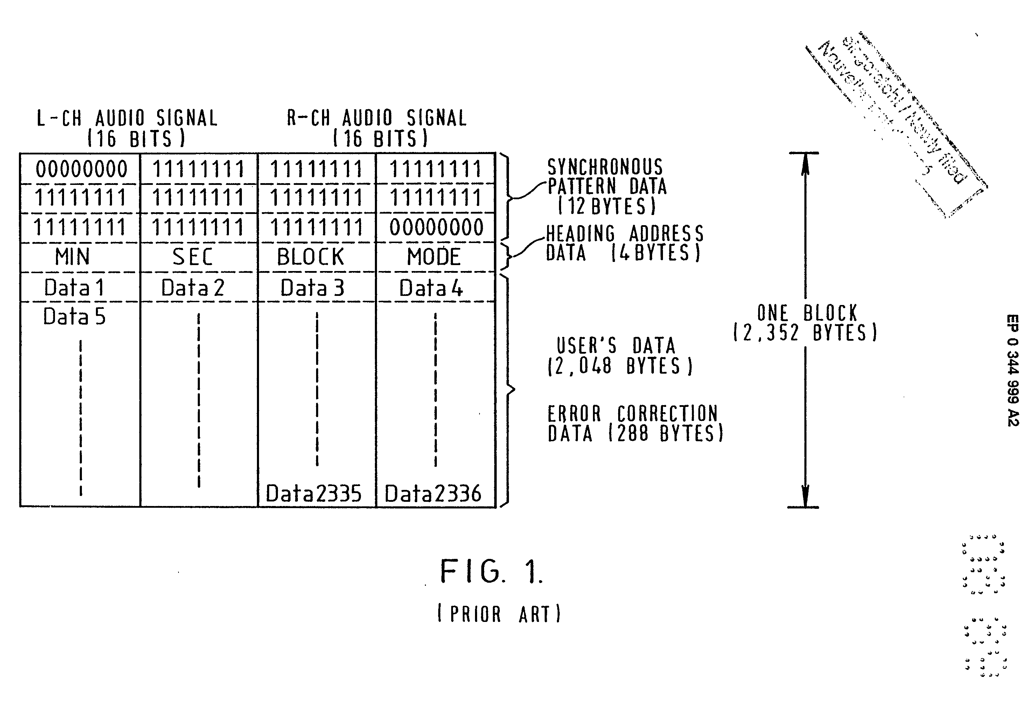

In the CD sound system, two channel (L-ch. and R-ch.) analog signals are sampled at 44.1 kHz and sample recorded as a 16-bit digital data words. In the CD-ROM system, the available 16-bit data word space per CD sound channel is divided into two data bytes each of 8-bits. Then, data blocks each are recorded with each data block comprising 2,352 bytes, as shown in FIGURE 1.

The data as shown in **FIGURE** 1 is composed of four kinds of data as follows:

I: Synchronous pattern data to enable recognition of the start of each block:      12 bytes

II: Heading address data:      4 bytes

III: User's data:      2,048 ($\simeq$ 2k) bytes

IV: Data usable as error correction data (MODE 1), or extended user's data (MODE 2): 288 bytes

The error correction data (MODE 1) in IV is used when errors can not be corrected by the C1 and C2 parity check codes of a CD format for music and the error rate in this case has been improved finally to $10^{-12}$ or below.

Further, a data error rate in MODE 2 is theoretically below $10^{-9}$. In this case, the fourth data (data in IV) is assigned as extended user's data so that the total user's data is increased to 3,336 ($= 2,048 + 288$) bytes.

One block of data is reproduced every 1/75 sec. and since the user's data in MODE 1 is 2k bytes/block, the data transfer rate of the CD-ROM is this mode is 2k x 75 = 150k bytes/sec. As a result, it is possible to record total data of 150k x 60 x 60 = 340M bytes on a CD-ROM disc with data recorded on one side for one hour. This recording capacity is equivalent to 500 - 1,000 ordinary floppy discs or about 270,000 sheets of documents with 2,000 characters per sheet. Thus, the CD-ROM is a recording medium having a large memory capacity and low error rate.

Further, part of the recording area of the CD-ROM can be used as a conventional music storage area and, it is also possible to mix data and musical information into recorded music.

When a prescribed command is transferred from a host computer, the CD-ROM driver retrieves a required data block recorded on the CD-ROM.

Then, when the retrieval by the CD-ROM driver is completed, the demanded user data is transferred to the host computer from the CD-ROM driver through an interface.

The interface connection between the CD-ROM driver and a host computer can be in an optional construction form. As an example, there is one interface constructed in accordance with an SCSI (Small Computer System Interface) standard. As implied by its name, this interface has been developed for small computer systems and was standardized by the American National Institute (referred to as ANI hereafter) in 1988.

This ANI SCSI basically consists of hardware and a protocol and has wide general applicability. The hardware comprises at least one initiator (command supply unit), such as a host computer, a prescribed number of targets (command execution units) and a SCSI bus for carrying data therebetween. Each target can include a prescribed number of sub units such as peripheral equipments. Thus, even when any peripheral equipment appears in the future, it can be connected to the SCSI bus. Recently, the ANI SCSI has been widely adopted for many peripheral equipments, such as magnetic disc units (floppy disc units, hard disc units), printers, magnetic tape units and optical disc units like CD-ROM drivers.

If, for instance, eight SCSI devices are connected to the SCSI bus, each of the devices is identified by an ID Number (Identifier), ranging from $ID_0$ to $ID_7$.

The SCSI may be composed of one host computer and seven targets, for instance, six hard disc units and one CD-ROM driver. Alternatively, the SCSI may be composed of seven host computers, and one CD-ROM driver.

Now, when assuming the host computer to be the initiator and the CD-ROM driver as the target, the CD-ROM reads data out of a disc according to a command from the host computer, and this read data is transferred to the host computer.

Further, according to the SCSI standard, each target can include seven sub units, such as the CD-ROM driver, etc. Each sub unit is assigned with LUN (abbreviation of Logical Unit Number). Thus, for example, a maximum of seven disc driver units are connectable to one target. As a result, a command from the initiator designates the ID and the LUN. If, for instance, the SCSI system consists of one host computer, a maximum forty nine sub units $(7 \times 7 = 49)$ of disc drivers can be connected to the SCSI bus.

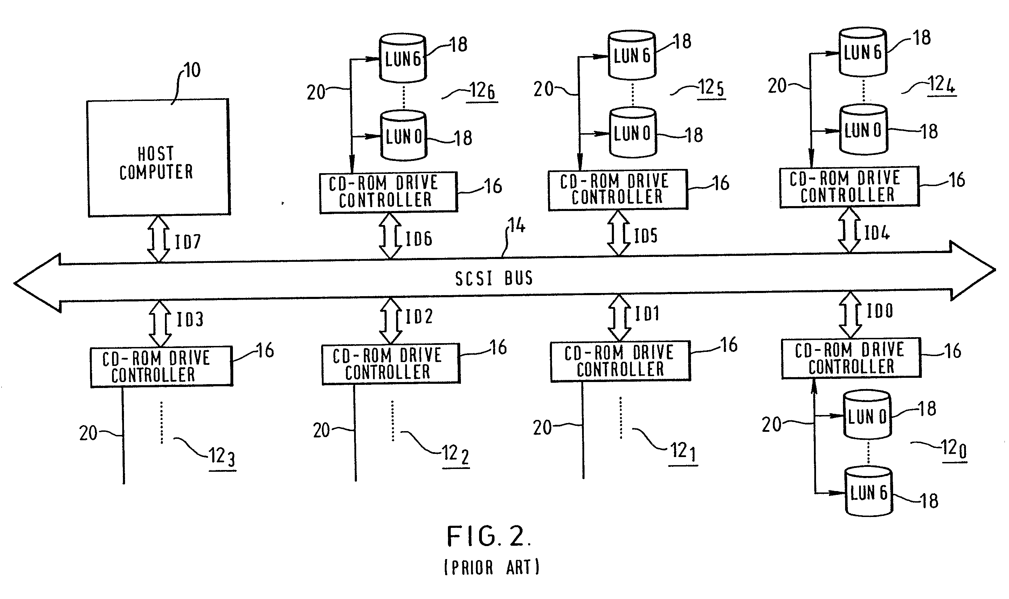

In an SCSI system known to the applicant, as shown in FIGURE 2, a host computer 10 and seven targets $12_0$-$12_6$ are coupled to an SCSI bus 14. Each of the targets $12_0$-$12_6$ includes a controller, such as a CD-ROM drive controller 16 and seven external memories, such as CD-ROM drive units 18. The CD-ROM drive units 18 are coupled to the CD-ROM drive controller 16 through a LUN bus 20.

The SCSI bus 14 transfers data between the host computer 10 and the CD-ROM drive controllers 16 according to the SCSI protocol. The LUN buses 20 transfer data read from the CD-ROM drive unit 18 to the CD-ROM drive controllers 16 according to an individual protocol provided for every target $12_0$-$12_6$.

$LU_0$ - $LUN_6$ in each target $12_0$-$12_6$ denote LUN unit numbers of the CD-ROM drive units 18. Also, $ID_0$ - $ID_7$ denote SCSI device unit numbers.

In the conventional SCSI system, the LUN buses 20 associated with the targets $12_0$-$12_6$ are provided with a protocol differing from the SCSI protocol assigned to the SCSI bus 14, as described above. Thus, because the LUN buses 20 are not provided with the SCSI protocol the LUN units, i.e., the CD-ROM drive units 18 cannot be connected directly to the SCSI bus 14. This means that if any target consists of only one CD-ROM device, this CD-ROM device is still required to be coupled to the SCSI bus 14 through the controller.

The present invention therefore seeks to provide an improved data transmission system for transferring data between a host computer and an external memory.

A data transmission system according to the present invention includes a data transmission system for transferring data between a host computer and an external memory comprising data bus means connected to the host computer for carrying data to and from the host computer according to a prescribed protocol, memory bus means connected to the external memory and memory control means connected between the data bus means and the memory bus means for transferring the data therebetween, characterized in that the memory bus means has the same prescribed protocol as the data bus means.

For a better understanding of the present invention and many of the attendant advantages thereof, reference will be made by way of example to the accompanying drawings, wherein:

Figure 1 is a diagram showing the data construction of a conventional CD-ROM system;

Figure 2 is a block diagram showing the configuration of a conventional SCSI system; and

Figure 3 is an SCSI system block diagram showing an embodiment of the present invention.

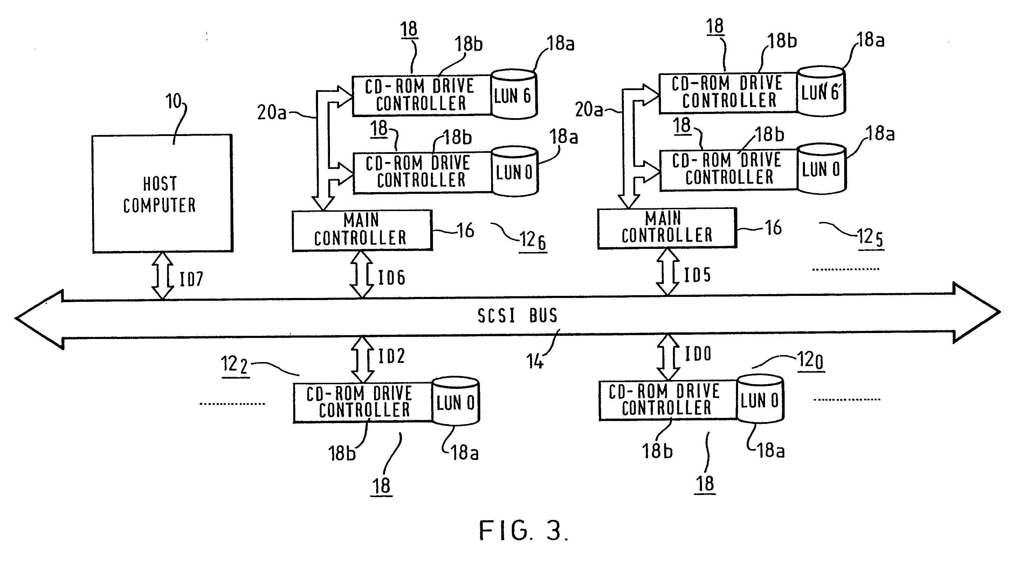

The present invention will be described in detail with reference to Figure 3. In Figure 3, reference numerals or letters used in Figure 2 will be used to designate like or equivalent elements for simplicity of explanation.

Referring now to Figure 3, an embodiment of an SCSI data transmission system according to the present invention will be described in detail.

As shown in FIGURE 3, the SCSI system includes a host computer 10, seven targets $12_0$-$12_6$ and an SCSI bus 14 for transferring data therebetween. The SCSI bus 14 transfers data between the host computer 10 and the targets $12_0$-$12_6$ according to the SCSI protocol.

Some of the targets $12_0$-$12_6$, e.g., two targets $12_5$ and $12_6$, each include a respective main controller 16 and seven external memories, such as CD-ROM devices 18. Each CD-ROM device 18 includes a CD-ROM drive unit 18a and a sub controller, e.g., a CD-ROM drive controller 18b. Some other targets, e.g., two targets $12_0$ and $12_1$ each include only one external memory, such as a CD-ROM device 18.

In the targets $12_5$ and $12_6$, the CD-ROM devices 18 are coupled to the main controllers 16 through LUN buses 20a. The LUN bus 20a transfers data read from the CD-ROM device 18 to the main controller 16 according to a protocol the same as the SCSI protocol. That is, the CD-ROM drive controller 18b of the CD-ROM device 18 is in conformity with the SCSI protocol.

Now, the operation of the SCSI system, as shown in **FIGURE** 3, will be described. It is assumed that the host computer 10 operates as the initiator and two targets 12₅ and 12₂ operate in response to a command from the host computer 10. Then, the main controller 16 drives the CD-ROM devices 18 in the target 12₅ through the LUN bus 20a. Data is read out from the CD-ROM drive units 18a of the CD-ROM devices 18. The data is written into a buffer memory (not shown) of the CD-ROM drive controller 18b in the target 12₂.

The memory capacity of each CD-ROM is enormous, e.g. about 340M bytes. Normally, such a memory capacity will be sufficient if a plurality of CD-ROM devices 18 are connected to each of the main controllers 16. If some extra memory capacity is required, this extra memory capacity may be covered by one additional CD-ROM device 18. In view of this, a target, such as the target 12₀ or 12₂ consisting of only one CD-ROM device 18 is provided, as described above.

In this described embodiment, it is required for the CD-ROM drive unit 18a and the CD-ROM drive controller 18b to be united in one construction unit like a CD-ROM device 18. Such a construction unit as a CD-ROM driver may be made in a size corresponding, for instance, to a 5.25 inch floppy drive .

CD-ROMs are a kind of read only memory. An ordinary specification demanded for an SCSI system using CD-ROMs is relatively simple. Thus, it is easy to unite the memory unit, i.e., the CD-ROM drive unit 18a and the sub controller, i.e., the CD-ROM drive controller 18b in one body and this may not result in a cost increase.

However, in a special system, a higher level of specification may be demanded. This demand may be satisfied by using a main controller 16 having a higher level control capacity.

As described above, the external memories 18 and the controller 16 are connected through the LUN bus 20a according to a protocol the same as the SCSI bus 14 for transferring data between the host computer 10 and the targets 12. Thus, an external memory 18 can be used as a target by direct connection to the SCSI bus 14.

Further, although in the above case CD-ROMs are used as the external memories, this invention is not limited to this above- described case. Other external memories such as a magnetic disc units,etc. may be used.

As described above, a data transmission system according to the present invention can use external memories which have a memory control function and are connectable to a data bus based on a prescribed protocol and a memory bus based on the same protocol as the data bus. In the data transmission system according to the present invention, it is possible to use external memories having a memory control function and connectable to data bus and memory buses by using a common protocol for the data bus and the memory buses.

As described above, the present invention can provide an extremely advantageous data transmission system.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and which could be defined by claims differing in scope from the following claims, which different claims may be adopted subsequently during prosecution, for example for the purposes of a divisional application.

Claims

1. A data transmission system for transferring data between a host computer (10) and an external memory (18) comprising data bus means (14) connected to the host computer (10) for carrying data to and from the host computer (10) according to a prescribed protocol, memory bus means (20a) connected to the external memory (18) for carrying data to and from the external memory (18) and memory control means (16) connected between the data bus means (14) and the memory bus means (20a) for transferring the data therebetween, **CHARACTERIZED IN THAT** the memory bus means (20a) has the same prescribed protocol as the data bus means (14).

2. The system of claim 1, wherein the memory bus means (20a) includes a plurality of individual memory buses, and the system also includes a plurality of external memories (18), one of the memories (18) being connected to each of the memory buses.

3. The system of claim 2 wherein the memory control means (16) includes a plurality of memory controllers, one of the memory controllers being connected between each of the memory buses and the data bus means (14).

4. The system of claim 1 wherein the prescribed protocol is the ANI SCSI (small computer system interface).

| L-CH AUDIO SIGNAL (16 BITS) | | R-CH AUDIO SIGNAL (16 BITS) | | |
|---|---|---|---|---|
| 00000000 | 11111111 | 11111111 | 11111111 | } SYNCHRONOUS PATTERN DATA (12 BYTES) |
| 11111111 | 11111111 | 11111111 | 11111111 | |
| 11111111 | 11111111 | 11111111 | 00000000 | |
| MIN | SEC | BLOCK | MODE | } HEADING ADDRESS DATA (4 BYTES) |
| Data 1 | Data 2 | Data 3 | Data 4 | |
| Data 5 | | | | USER'S DATA (2,048 BYTES) |
| | | | | ERROR CORRECTION DATA (288 BYTES) |
| | | Data 2335 | Data 2336 | |

ONE BLOCK (2,352 BYTES)

## FIG. 1.

(PRIOR ART)

EP 0 344 999 A2

FIG. 2.

(PRIOR ART)

EP 0 344 999 A2

FIG. 3.

EP 0 344 999 A2